# EUROPÄISCHE PATENTSCHRIFT

(11) **EP 1 326 092 B1**
(45) Veröffentlichungstag und Bekanntmachung des Hinweises auf die Patenterteilung: **15.03.2006**
(21) Anmeldenummer: 02024066.9
(22) Anmeldetag: 29.10.2002
(51) Int. Cl.: G01S 17/89, G01S 7/481

(54) **Mehrkanalempfängersystem für winkelaufgelöste Laserentfernungsmessung**
Multi channel receiver system for angle dependent laser distance measurement
Recepteur multicanaux pour la mesure de distance par laser en fonction de la position angulaire

(30) Priorität: 08.01.2002 DE 10200366
(43) Veröffentlichungstag der Anmeldung: 09.07.2003
(73) Patentinhaber: Zeiss Optronik GmbH, 73447 Oberkochen (DE)
(72) Erfinder: Becht, Hubert, Dipl.-Phys., 88515 Langenenslingen (DE)
(74) Vertreter: Schmid, Wolfgang

(56) Entgegenhaltungen:
- EP-A- 1 154 639
- US-B1- 6 246 822

## Beschreibung

Die Erfindung betrifft ein Mehrkanalempfängersystem für winkelaufgelöste Laserentfernungsmessung bei der mit einem Laserlichtpuls eines Lasers unter Verwendung des Pulslaufzeitverfahrens die Entfernungen mehrerer Zielpunkte mittels eines Arrays bestehend aus einer Mehrzahl an Aperturen, eines Photodetektors und eines Auswerteschaltkreises, gemessen werden.

Bei Pulslaufzeitverfahren wird die Zeit zwischen dem Aussenden und dem Empfangen eines vom Ziel reflektierten Laserpulses gemessen, dessen Pulsdauer typischerweise einige Nanosekunden beträgt.

Für eine Reihe von Anwendungen sind Entfernungsmesser, die mit einem einzigen Laserpuls die Entfernung mehrerer Zielpunkte bestimmen können, besonders gut geeignet. Durch die genaue Vermessung der Entfernung mehrerer Zielpunkte lassen sich Aussagen über die Form und die Art des Zieles ableiten, die eine automatische Erkennung des Zieles ermöglichen können.

Ein Mehrkanalempfängersystem für winkelaufgelöste Laserentfernungsmessung bei der mit einem Laserlichtpuls eines Lasers unter Verwendung des Pulslaufzeitverfahrens die Entfernungen mehrerer Zielpunkte mittels eines Arrays bestehend aus einer Mehrzahl an Aperturen, eines Photodetektors und eines Auswerteschaltkreises, gemessen werden ist beispielsweise aus der US 4,380,391 bekannt. Hier kann ein Array aus Lichtleitfasern in der Empfangsebene angebracht werden, dessen einzelne Lichtleiter unterschiedliche Längen besitzen und an einen einzelnen Photodetektor angekoppelt sind. Damit kann mit Hilfe eines geeigneten Zeitscheibenmultiplexverfahrens eine Zuordnung der einzelnen Detektorsignale zu den jeweiligen Empfängersehfeldern wieder erfolgen. Bei diesem Verfahren wird nur noch ein einzelner Auswerteschaltkreis benötigt. Dadurch entfallen die unterschiedlichen Toleranzen mehrerer Auswerteschaltkreise. Nachteilig war bisher die schwierige Zuordnung der Detektorsignale zu den jeweiligen Empfängersehfeldern bei starken Entfernungsdifferenzen der jeweiligen Zielpunkte. Im allgemeinen kann es passieren, daß die Reihenfolge der Detektorsignale nicht mehr der Reihenfolge der Faserlänge entspricht und eine genaue Zuordnung der Pulse zu den bestimmten Sehfeldern dadurch unmöglich wird. Bestehende Lösungen dieses Problems sind beispielsweise die Verlängerung der jeweiligen Lichtleitfasern (beispielsweise einige hundert Meter), um dadurch eine bessere Zuordnung zu erhalten. Die dadurch entstehende Komplexität und hohe Baugröße der Mehrkanalempfängersysteme ist sehr nachteilig.

Zum weiteren allgemeinen Stand der Technik bezüglich der Realisierung des Mehrkanalempfängers sei auf "Krug et al., Application of a 6 x 8 Silicon APD Array and Hybrid Electronics for Scannerless 3D Imaging Ladar, NATO/IRIS Active Systems, 1995, Vol. II, Seiten 79 bis 89" verwiesen. Hier kann ein Photodiodenarray direkt in der Empfangsebene angebracht werden. Jede einzelne Photodiode dieses Arrays verfügt dann über einen eigenen Auswerteschaltkreis.

Des weiteren zeigt "Burns und Yun, Compact, multichannel receiver using InGaAs APDs for single pulse, eye-safe, laser radar imagery, SPIE Vol. 3065, 1997, Seiten 22 bis 29" ein Array aus Lichtleitfasern, das in der Empfangsebene angebracht wird, dessen einzelne Lichtleiter an diskrete Photodetektoren angekoppelt werden. Jeder dieser Photodetektoren verfügt auch hier über einen eigenen Auswerteschaltkreis.

Nachteilig bei den zuvor genannten beiden Systemen zum weiteren allgemeinen Stand der Technik ist, daß die jeweiligen Auswerteschaltkreise unterschiedliche elektronische Bauelemente aufweisen und dadurch jeweils unterschiedliche Toleranzen bei der Bestimmung der Meßpunkte auftreten können.

Aus der EP 1 154 639 A1 sind ein Multi-Pixel-Abbildungsverfahren und -system bekannt, welche einen einzelnen Detektor verwenden, der mit einer Zeitverzögerungseinrichtung verbunden ist.

Der vorliegenden Erfindung liegt daher die Aufgabe zugrunde, ein Mehrkanalempfängersystem für winkelaufgelöste Laserentfernungsmessung zu schaffen, das die oben beschriebenen Nachteile des Standes der Technik löst, insbesondere ein Mehrkanalempfängersystem mit geringer Baugröße und Komplexität schafft, bei dem eine eindeutige Zuordnung der mit einem Photodetektor nachgewiesenen Signale zu den einzelnen Empfängersehfeldern möglich ist und bei für alle Empfängersehfelder gleichem Auswerteschaltkreis eine verbesserte Genauigkeit der Entfernungsmessung erreicht wird.

Diese Aufgabe wird erfindungsgemäß durch den Gegenstand von Anspruch 1 gelöst.

Durch diese Maßnahmen kann ein Mehrkanalempfängersystem mit geringer Baugröße und Komplexität aufgebaut werden, da nur ein Photodetektor und ein Auswerteschaltkreis erforderlich ist. Besonders vorteilhaft ist die Möglichkeit der eindeutigen Zuordnung der mit dem einzigen Photodetektor nachgewiesenen Signale zu den einzelnen Empfängersehfeldern. Dies wird in einfacher Weise dadurch erreicht, daß durch die spezifischen Längendifferenzen der jeweiligen Fasern und aufgrund deren, von den jeweiligen Verteilungsverhältnissen vorgegebenen, charakteristischen Pulsamplituden, den Pulsen eine individuelle Zusatzinformation zur Zuordnung aufgeprägt wird. Ein weiterer Vorteil des Verfahrens ist dadurch gegeben, daß sich bei Vermessung mehrerer Pulse desselben Ziels die statistische Genauigkeit der Pulslaufzeitmessung und dadurch der Entfernungsmessung erhöht.

Vorteilhafte Ausgestaltungen und Weiterbildungen der Erfindung ergeben sich aus den Unteransprüchen und aus dem nachfolgend anhand der Zeichnung prinzipmäßig beschriebenen Ausführungsbeispiel.

Es zeigt:
- Figur 1: einen prinzipmäßigen Aufbau eines erfindungsgemäßen Mehrkanalempfängersystems; und
- Figur 2: ein prinzipmäßiges Flußdiagramm eines Auswerteschaltkreises.

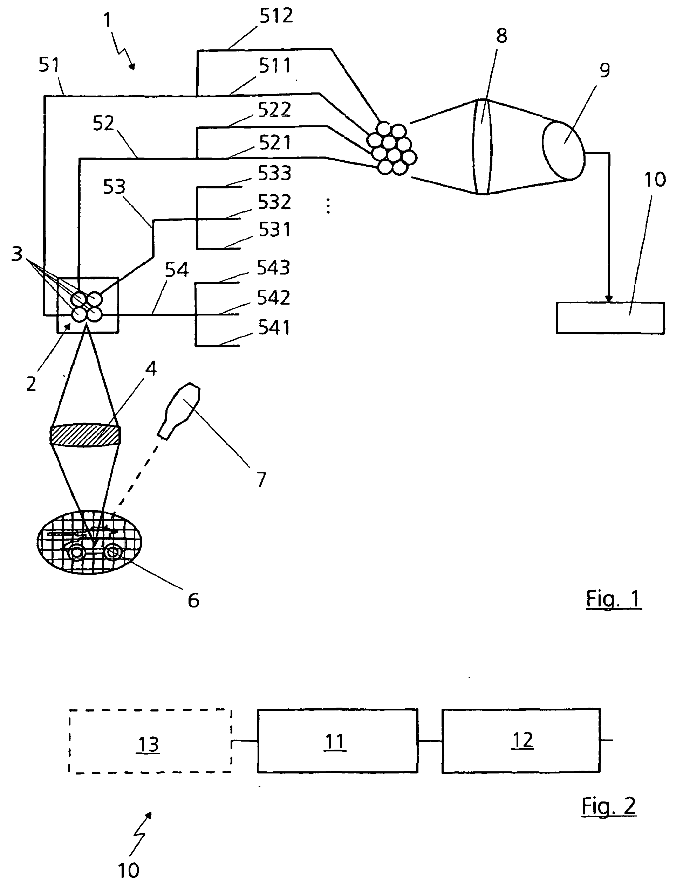

Wie aus Figur 1 ersichtlich, weist ein Mehrkanalempfängersystem 1 ein Array 2 aus vier einzelnen Aperturen bzw. Öffnungsblenden 3 in der Abbildungsebene einer Empfangsoptik 4 auf. Die Aperturen 3 sind als 2 x 2 Matrix direkt nebeneinander angeordnete Enden von Lichtleitfasern 51 bis 54 ausgebildet. Die Lichtleitfasern 51 bis 54 verteilen das in die Aperturen 3 eintretende, von Zielpunkten 6 reflektierte Laserlicht (in Figur 1 gestrichelt angedeutet) eines Lasers 7 auf weitere zehn Lichtleitfasern 511 bis 543 mit jeweils individueller bzw. unterschiedlicher Länge, die einer Lichtlaufzeit t_{1..4,1..3} entspricht, wobei das eintretende Laserlicht in einem vorgewählten Verteilungsverhältnis durch Verzweigung auf die Lichtleitfasern 511 bis 543 verteilt wird, d.h. in den jeweiligen Lichtleitfasern eine relative Amplitude aufweist (siehe nachstehende Tabelle).

| Apertur Nr. | Faser Nr. | Länge | relative Amplitude |
|---|---|---|---|
| 51 | 1 | 1 m | 0,5 |
| 51 | 2 | 5 m | 0,5 |
| 52 | 1 | 31 m | 0,4 |
| 52 | 2 | 37 m | 0,6 |
| 53 | 1 | 61 m | 0,2 |
| 53 | 2 | 68 m | 0,3 |
| 53 | 3 | 76 m | 0,5 |
| 54 | 1 | 91 m | 0,4 |
| 54 | 2 | 101 m | 0,2 |
| 54 | 3 | 110 m | 0,4 |

Der im vorliegenden Ausführungsbeispiel verwendete Laser 7 erzeugt Laserlicht der Wellenlänge 1,5 µm mit einer Pulsdauer von 10 ns und einer Strahldivergenz von 500 µrad.

Die aus den Lichtleitfasern 511 bis 545 austretenden Laserlichtimpulse werden durch eine Koppeloptik 8 auf den Photodetektor 9 konzentriert. Die Koppeloptik 8 ermöglicht im vorliegenden Ausführungsbeispiel eine 2:1 verkleinernde Abbildung. Das Ausgangssignal des Photodetektors 9 wird in den Auswerteschaltkreis 10 eingespeist. Der verwendete Photodetektor 9 ist als InGaAs-PIN-Photodiode mit einer aktiven Fläche von 200 µm Durchmesser ausgebildet. Die Bandbreite beträgt etwa 40 Mhz. Das Ausgangssignal des Photodetektors 9 weist Pulse zu Zeitpunkten t₀ + t_{1,1} ... t₀ + t_{4,3} auf, wobei t₀ die Lichtlaufzeit bezeichnet, die sich aus der Entfernung des Zielpunktes 6 ergibt und die aus den bekannten Lichtlaufzeiten t_{1,1} ... t_{4,3} ermittelbar ist. Die Pulse weisen eine jeweils charakteristische Pulsamplitude A_{1..4,1..3} auf, die sich aus dem Verteilungsverhältnis der Lichtleitfasern 511 bis 543 ergibt.

Jeder Apertur 3 sind nun mehrere Pulse, nämlich zu den Zeiten to + t_{1..4,1} ··· to + t_{1..4,2..3} mit charakteristischen Amplituden A_{1..4,1} ··· A_{1..4,2..3} zuordenbar, wobei in dieser Ausführungsform eine Zuordnung der Pulse zu den jeweiligen Aperturen 3 nach Verteilung wieder möglich ist.

Im Auswerteschaltkreis 10 wird nun die Entfernung der Zielpunkte 6 bestimmt bzw. erfolgt eine Zuordnung der Pulsgruppen zu den jeweiligen Aperturen 3. Im vorliegenden Ausführungsbeispiel sind die Lichtleitfasern 511 bis 543 Quarzglasfasern mit Stufenindex und Durchmessern Core/Cladding von 100/110 µm ausgebildet.

Wie aus Figur 2 ersichtlich, weist der Auswerteschaltkreis 10 eine Pulsdetektionseinheit 11, eine Pulsamplitudendetektionseinheit 12 und einen optionalen (in Figur 2 gestrichelt angedeuteten) AD-Wandler 13 auf, der das analoge Ausgangssignal des Photodetektors 9 digitalisiert. In der Pulsdetektionseinheit 11 wird das vom AD-Wandler 13 digitalisierte Ausgangssignal des Photodetektors 9 analysiert, indem zunächst die Zeitpunkte ermittelt werden, zu denen ein Puls im digitalisierten Ausgangssignal des Photodetektors 9 auftritt, wobei hier in vorteilhafter Weise ein Schwellwertverfahren bzw. ein Korrelationsverfahren, z.B. Kreuzkorrelation, zur Anwendung kommt. In der Pulsamplitudendetektionseinheit 12 wird für jeden Puls zu dem in der Pulsdetektionseinheit 11 ermittelten Zeitpunkt die charakteristische Pulsamplitude A_{1..4,1..3} gemessen, wobei zur Ermittlung dieser charakteristischen Pulsamplitude A_{1..4,1..3} eine direkte Analyse des digitalisierten Ausgangssignals des Photodetektors 9 erfolgt.

In einem anderen Ausführungsbeispiel ohne AD-Wandler 13 kann eine direkte Analyse des analogen Ausgangssignals des Photodetektors 9, z.B. mit Hilfe einer Schwellwertdetektion und anschließender Pulsspitzenwerterfassung, erfolgen. Ähnlich verhält es sich mit der Pulsdetektionseinheit 11, wenn auf einen AD-Wandler 13 verzichtet wird.

## Patentansprüche

1. Mehrkanalempfängersystem für winkelaufgelöste Laserentfernungsmessung umfassend ein Array, bestehend aus einer Mehrzahl von Aperturen, mehrere Lichtleitfasem, einen Photodetektor und einen Auswerteschaltkreis, bei der mit einem Laserlichtpuls eines Lasers unter Verwendung des Pulslaufzeitverfahrens die Entfernungen mehrerer Zielpunkte gemessen werden, **dadurch gekennzeichnet, daß**
a) die in jede der Aperturen (3) eintretenden von den Zielpunkten (6) reflektierten Laserlichtpulse auf wenigstens zwei Lichtleitfasern (511 bis 543) mit individueller Länge, - die einer Lichtlaufzeit t_{n,m} entspricht, in einem vorgewählten Verteilungsverhältnis bezüglich der Puls-amplituden verteilt,
b) anschließend durch den .Photodetektor (9) empfangen und
c) im Auswerteschaltkreis (10) verarbeitet werden, wobei
d) das Ausgangssignal des Photodetektors (9) Pulse mit jeweils charakteristischen Pulsamplituden A_{n,m}, die sich aus den Verteilungsverhältnissen ergeben, zu Zeitpunkten to + t_{1,1}, ..., t₀ + t_{n,m} aufweist, wobei
e) t₀ die Lichtlaufzeit bezeichnet, die sich aus der Entfernung des Zielpunktes (6) ergibt und die aus den bekannten Lichtlaufzeiten t_{1,1},... ,t_{n,m} ermittelbar ist, wobei
f) jeder Apertur (3) n mehrere Pulse, nämlich zu den Zeiten to + t_{n,1}, ... ,to + t_{n,m}, mit charakteristischen Amplituden A_{n,1}, ...,A_{n,m} zuordenbar sind, wobei bei vorgewählter Wahl von n,m, den t_{n,m} und den Verteilungsverhältnissen eine Zuordnung der Pulse zu den jeweiligen Aperturen (3) nach der Verteilung eindeutig moglich ist und wobei
g) damit die Entfernungen der Zielpunkte (6) bestimmbar sind.

2. Mehrkanalempfängersystem nach Anspruch 1, **dadurch gekennzeichnet, daß** die Aperturen (3) als eine Anzahl von neben-einander angeordneten Enden der Lichtleitfasern (51 bis 54) ausgebildet sind.

3. Mehrkanalempfängersystem nach einem der Ansprüche 1 oder 2, **dadurch gekennzeichnet, daß** durch eine Koppeloptik (8) die aus den Lichtleitfasern (511 bis 543) austretenden Lichtimpulse auf den Photodetektor (9) konzentriert werden.

4. Mehrkanalempfängersystem nach Anspruch 1, 2 oder 3, **dadurch gekennzeichnet, daß** der Auswerteschaltkreis (10) eine Pulsdetektionseinheit (11) und eine Pulsamplitudendetektionseinheit (12) aufweist.

5. Mehrkanalempfängersystem nach einem der Ansprüche 1 bis 4, **dadurch gekennzeichnet, daß** der Auswerteschaltkreis (10) einen AD-Wandler (13) aufweist.

6. Mehrkanalempfängersystem nach einem der Ansprüche 4 oder 5, **dadurch gekennzeichnet, daß** in der Pulsdetektionseinheit (11) das Ausgangssignal des Photodetektors (9) analysiert wird, indem zunächst die Zeitpunkte ermittelt werden, zu denen ein Puls im Ausgangssignal des Photodetektors (9) auftritt, wobei dazu ein Schwellwertverfahren bzw. ein Korrelationsverfahren angewendet wird.

7. Mehrkanalempfängersystem nach einem der Ansprüche 4, 5 oder 6, **dadurch gekennzeichnet, daß** in der Pulsamplitudendetektionseinheit (12) für jeden Puls zu dem in der Pulsdetektionseinheit (11) ermittelten Zeitpunkt die charakteristische Pulsamplitude A_{n,m} gemessen wird.

8. Mehrkanalempfängersystem nach Anspruch 7, **dadurch gekennzeichnet, daß** die Ermittlung der charakteristischen Pulsamplitude A_{n,m} in der Pulsamplitudendetektionseinheit (12) durch direkte Analyse des analogen Ausgangssignals des Photodetektors (9) erfolgt.

9. Mehrkanalempfängersystem nach Anspruch 8, **dadurch gekennzeichnet, daß** die direkte Analyse des analogen Ausgangssignals des Photodetektors (9) durch eine Schwellwertdetektion mit anschließender Pulsspitzenwerterfassung erfolgt.

10. Mehrkanalempfängersystem nach einem der Ansprüche 5 bis 9, **dadurch gekennzeichnet, daß** das analoge Ausgangssignal des Photodetektors (9) durch den AD-Wandler (13) digitalisiert wird.

11. Mehrkanalempfängersystem nach Anspruch 10, **dadurch gekennzeichnet, daß** in der Pulsdetektionseinheit (11) das von dem AD-Wandler (13) digitalisierte Ausgangssignal des Photodetektors (9) analysiert wird, indem zunächst die Zeitpunkte ermittelt werden, zu denen ein Puls im Ausgangssignal des Photodetektors (9) auftritt, wobei dazu ein Schwellwertverfahren bzw. ein Korrelationsverfahren angewendet wird.

12. Mehrkanalempfängersystem nach Anspruch 11, **dadurch gekennzeichnet, daß** die Ermittlung der charakteristischen Pulsamplitude A_{n,m} in der Pulsamplitudendetektionseinheit (12) mit geeigneten Algorithmen an dem vom AD-Wandler (13) digitalisierten Ausgangssignal des Photodetektors (9) erfolgt.

13. Mehrkanalempfängersystem nach einem der Ansprüche 1 bis 12, **dadurch gekennzeichnet, daß** die Lichtleitfasern (511 bis 543) als Multimode-Lichtleitfasern mit Stufenindex ausgebildet sind.

## Claims

1. Multichannel receiver system for angle resolved laser range measurement, comprising an array consisting of a multiplicity of apertures, a plurality of optical fibres, a photodetector and an evaluation circuit, in which the ranges of a plurality of targets are measured with a laser light pulse of a laser by using the pulse time of flight method, **characterised in that**
a) the laser light pulses reflected by the targets (6) and entering each of the apertures (3) are distributed in a preselected distribution ratio, with respect to the pulse amplitudes, between at least two optical fibres (511 to 543) with an individual length that corresponds to a time of flight t_{n,m},
b) are subsequently received by the photodetector (9), and
c) are processed in the evaluation circuit (10), wherein
d) the output signal of the photodetector (9) comprises pulses with respective characteristic pulse amplitudes A_{n,m}, which are due to the distribution ratios, at times to + t_{1,1}, ..., to + t_{n,m}, wherein
e) to denotes the light time of flight which is due to the ranges of the target (6), and which can be determined from the known light times of flight t_{1,1}, ..., t_{n,m},
f) each aperture (3) can be assigned n pluralities of pulses, i.e. at times to + tₙ, 1, ..., t₀ + t_{n,m}, with characteristic amplitudes A_{n,1}, ... , A_{n,m}, assignment of the pulses to the respective apertures (3) after the distribution being uniquely possible with a preselected choice of n, m, the t_{n,m} and the distribution ratios, and wherein
g) the ranges of the targets (6) can thereby be determined.

2. Multichannel receiver system according to Claim 1, **characterised in that** the apertures (3) are designed as a number of adjacently arranged ends of the optical fibres (51 to 54).

3. Multichannel receiver system according to one of Claims 1 and 2, **characterised in that** the light pulses emerging from the optical fibres (511 to 543) are concentrated onto the photodetector (9) by coupling optics (8).

4. Multichannel receiver system according to Claim 1, 2 or 3, **characterised in that** the evaluation circuit (10) comprises a pulse detection unit (11) and a pulse amplitude detection unit (12).

5. Multichannel receiver system according to one of Claims 1 to 4, **characterised in that** the evaluation circuit (10) comprises an AD converter (13).

6. Multichannel receiver system according to one of Claims 4 and 5, **characterised in that** the output signal of the photodetector (9) is analysed in the pulse detection unit (11) by first determining the times at which a pulse occurs in the output signal of the photodetector (9), a threshold value method or a correlation method being employed for this.

7. Multichannel receiver system according to one of Claims 4, 5 and 6, **characterised in that** the characteristic pulse amplitude A_{n,m} is measured in the pulse amplitude detection unit (12) for each pulse at the time determined in the pulse detection unit (11).

8. Multichannel receiver system according to Claim 7, **characterised in that** the determination of the characteristic pulse amplitude A_{n,m} in the pulse amplitude detection unit (12) is carried out by direct analysis of the analogue output signal of the photodetector (9).

9. Multichannel receiver system according to Claim 8, **characterised in that** the direct analysis of the analogue output signal of the photodetector (9) is carried out by a threshold value detection with subsequent pulse peak value acquisition.

10. Multichannel receiver system according to one of Claims 5 to 9, **characterised in that** the analogue output signal of the photodetector (9) is digitised by the AD converter (13).

11. Multichannel receiver system according to Claim 10, **characterised in that** the output signal of the photodetector (9) digitised by the AD converter (13) is analysed in the pulse detection unit (11) by first determining the times at which a pulse occurs in the output signal of the photodetector (9), a threshold value method or a correlation method being employed for this.

12. Multichannel receiver system according to Claim 11, **characterised in that** the determination of the characteristic pulse amplitude A_{n,m} in the pulse amplitude detection unit (12) is carried out by suitable algorithms on the output signal of the photodetector (9) digitised by the AD converter (13).

13. Multichannel receiver system according to one of Claims 1 to 12, **characterised in that** the optical fibres (511 to 543) are designed as multimode optical fibres with a graded index.

## Revendications

1. Système de récepteur multicanal pour une mesure de distance au laser avec résolution angulaire, comprenant une matrice constituée d'une pluralité d'ouvertures, de plusieurs fibres optiques, d'un photodétecteur et d'un circuit d'analyse, grâce auquel, à l'aide d'une impulsion laser produite avec un procédé de génération d'impulsions laser de longue durée, les distances entre plusieurs points de mire sont mesurées, **caractérisé en ce que**
a) les impulsions laser, réfléchies par les points de mire (6), entrant dans chacune des ouvertures (3) sur au moins deux fibres optiques (511 à 543) avec des longueurs différentes qui correspondent à un temps de parcours de la lumière t_{n,m}, sont réparties avec un rapport de répartition prédéterminé en ce qui concerne les amplitudes des impulsions,
b) puis reçues par le photodétecteur (9) et
c) traitées dans le circuit d'analyse (10),
d) le signal de sortie du photodétecteur (9) comprenant des impulsions avec des amplitudes caractéristiques A_{n,m}, qui résultent des rapports de répartition, aux instants to + t_{1,1}, ..., to + t_{n,m,}
e) t₀ désignant le temps de parcours de la lumière qui résulte de la distance du point de mire (6) et qui peut être déterminé à partir des temps de parcours connus t_{1,1,} ..., t_{n,m},
f) des impulsions aux instants t₀ + t_{n,1}, ..., t₀ + t_{n,m}, avec des amplitudes caractéristiques A_{n,1}, ..., ₁ A_{n,m} pouvant être associées à chaque ouverture (3), une association des impulsions avec les ouvertures (3) correspondantes étant possible de manière univoque selon la répartition lors d'un choix prédéterminé de n, m, des instants t_{n,m} et des rapports de répartitions et
g) les distances des points de mire (6) pouvant ainsi être déterminées.

2. Système de récepteur multicanal selon la revendication 1, **caractérisé en ce que** les ouvertures (3) sont conçues comme une pluralité d'extrémités de fibres optiques (51 à 54) disposées les unes à côté des autres.

3. Système de récepteur multicanal selon l'une des revendications 1 ou 2, **caractérisé en ce que**, grâce à une optique de couplage (8), les impulsions de lumière sortant des fibres optiques (511 à 543) vers le photodétecteur (9), sont concentrées.

4. Système de récepteur multicanal selon la revendication 1, 2 ou 3, **caractérisé en ce que** le circuit d'analyse (10) comprend une unité de détection d'impulsions (11) et une unité de détection de l'amplitude des impulsions (12).

5. Système de récepteur multicanal selon l'une des revendications 1 à 4, **caractérisé en ce que** le circuit d'analyse (10) comprend un convertisseur analogique-numérique (13).

6. Système de récepteur multicanal selon l'une des revendications 4 ou 5, **caractérisé en ce que**, dans l'unité de détection des impulsions (11), le signal de sortie du photodétecteur (9) est analysé en déterminant d'abord les instants auxquels une impulsion apparaît dans le signal de sortie du photodétecteur (9), un procédé à valeur seuil ou un procédé de corrélation étant utilisé pour cela.

7. Système de récepteur multicanal selon l'une des revendications 4, 5 ou 6, **caractérisé en ce que**, dans l'unité de détection de l'amplitude des impulsions (12), pour chaque impulsion apparue à l'instant déterminé dans l'unité de détection des impulsions (11), l'amplitude d'impulsion caractéristique A_{n,m} est mesurée.

8. Système de récepteur multicanal selon la revendication 7, **caractérisé en ce que** la détermination de l'amplitude d'impulsion caractéristique A_{n,m} est réalisée dans l'unité de détection de l'amplitude d'impulsion (12) à l'aide d'une analyse directe du signal de sortie analogique du photodétecteur (9).

9. Système de récepteur multicanal selon la revendication 8, **caractérisé en ce que** l'analyse directe du signal de sortie analogique du photodétecteur (9) est réalisée à l'aide d'une détection de valeur seuil puis d'une détermination de la crête de l'amplitude.

10. Système de récepteur multicanal selon l'une des revendications 5 à 9, **caractérisé en ce que** le signal de sortie analogique du photodétecteur (9) est numérisé à l'aide du convertisseur analogique-numérique (13).

11. Système de récepteur multicanal selon la revendication 10, **caractérisé en ce que**, dans l'unité de détection des impulsions (11), le signal de sortie du photodétecteur (9) est analysé par le convertisseur analogique-numérique (13) en déterminant d'abord les instants auxquels une impulsion apparaît dans le signal de sortie du photodétecteur (9), un procédé à valeur seuil ou un procédé de corrélation étant utilisé pour cela.

12. Système de récepteur multicanal selon la revendication 11, **caractérisé en ce que** la détermination de l'amplitude d'impulsion caractéristique A_{n,m} est réalisée dans l'unité de détection de l'amplitude des impulsions (12) avec des algorithmes appropriés appliqués au signal de sortie du photodétecteur (9) numérisé par le convertisseur analogique-numérique (13).

13. Système de récepteur multicanal selon l'une des revendications 1 à 12, **caractérisé en ce que** les fibres optiques (511 à 543) sont conçues comme des fibres optiques multimodes à saut d'indice.
